# EUROPEAN PATENT SPECIFICATION

(11) **EP 4 347 948 B1**
(45) Date of publication and mention of the grant of the patent: **02.07.2025**
(21) Application number: 22727358.8
(22) Date of filing: 20.05.2022
(51) Int. Cl.: D21D 5/28, D21B 1/34, B01F 27/71

(54) **ACCEPT TANK MIXING ARRANGEMENT**
AKZEPTMISCHEINRICHTUNG
DISPOSITIF POUR MÉLANGER DE L'ACCEPTÉ

(30) Priority: 25.05.2021 FI 20215615
(43) Date of publication of application: 10.04.2024
(73) Proprietor: Andritz Oy, 00180 Helsinki (FI)
(72) Inventor: VANHALA, Kimmo, 48601 Kotka (FI)
(74) Representative: Devine, Christopher
(86) International application number: PCT/FI2022/050344
(87) International publication number: WO 2022/248765

(56) References cited:
- CN-A- 108 330 719
- US-A- 2 661 668

## Description

### Scope of the invention

The invention is an arrangement for mixing of suspension within an accept tank which has a form of two opposite arched ends and an elongated section between the arched ends. Especially, the invention is aimed for mixing of pulped fiber suspension of cellulosic fibers from recycled material.

### Background of the invention

Accept tanks are used in papermaking industry for mixing screened fibers and small particles that are supplied from a drum pulper. The accept tank is placed under a last screen section of the drum pulper. The tank may or may not aim to separate heaviest particles like sand or glass to the bottom of the tank.

Publication CN108330719 discloses an arrangement wherein propulsion of mixers is aligned so that it aims against sidewalls of arched ends of the tank.

### Summary of the invention

Least energy consumption is best achieved by sufficiently stable and coherent circular flow within the accept tank. Often separation of the particles is not wanted to happen in the accept tank, as it can be better performed within later phases with least fiber loss. Then mixing conditions should keep the particles flowing mixed with the liquid and prevent precipitation. A strong coherent and stable flow is desired. Local backflow, swirl and standing water will cause accumulations of particles to the bottom of the tank. Accumulations may grow and destabilize flow which will further grow the accumulations. Then the process should be occasionally stopped for removal of the accumulations. Simulations and practice have revealed that prior art positions and alignments of propellers of mixers within an accept tank will create excess turbulence, differently flowing areas and even counterflows within the tank.

The object of the invention is to achieve best mixing results with least energy consumption and least precipitation of particles within an accept tank. These and other objects that will be apparent from the following summary and description are achieved by the accept tank arrangement according to the appended claims.

An accept tank for mixing of pulped fiber suspensions has a form of two opposite arched ends having curved sidewalls and an elongated section between the arched ends having two opposite sidewalls. The tank has an accept outlet and it may have a reject outlet. The accept tank has at least two mixers and at least one of the mixers are located within the arched end. The mixers have propellers at ends of their axles. At least two of the mixers should have an axle which horizontally points to the direction of the elongated section. The axles should point to the same side of the tank when looked from the arched end where the mixer is attached. The center line of at least one axle of a mixer is aimed at a point, which is at the sidewall of the elongated section at least 25% of the length away from the beginning of the elongated section. Advantageously the length of the tank is 1,5 to 2 times longer than is the width of the tank for best flow conditions. The propellers of the mixers should have a diameter which is from 10% to 20% of the width of the tank for creating suitable sized wide
flow.

Preferably the number of the mixers is two as the number of mixers also raises manufacturing and operation costs. One mixer is not adequate for the purpose. Preferably the propellers are positioned and/or aligned symmetric with respect to the centerpoint of the accept tank. In simulations, the feature that the axle is angled away from the centerline to point to the sidewall of the elongated section, creates most evenly distributed speed of flow within the tank. At least the said axle of the mixer which points at the sidewall of the elongated section should point to the other side of the tank than the side where the accept outlet is located. For best flowing properties, the propeller at the end of the at least one axle should be located within the arched end. The location and position of the accept outlet may affect to the flow, so that the optimum position and alignment of the propeller at that side may differ from the optimum alignment for the other propeller at other side of the accept tank.

Advantageously within the center of the elongated section is an elongated centerpiece, which has a length which is at least 50 % of the length of the elongated center section. Then there would not be standing water and turbulences between the different direction of flows at the centerline of the tank. Preferably, the elongated centerpiece has rounded ends and a width which is less than 30 % of the width of the elongated center section. The tank should have an essentially flat bottom at least within the elongated section of the tank. So, even though it has slanted or concave bottom, variation of depth should be below 5 % of the length of the elongated section. Quite flat bottom prevents particles accumulating within the area.

Advantageously at least a part of the accept outlet is positioned in flow direction at least partially at the end half of the elongated section and/or within the arched end opposite to the side of the mixer. A reject outlet is preferably located at bottom of at least at one of one the ached ends of the tank. The reject outlet is preferably positioned in flow direction after the accept outlet within the same elongated section or at the next arched end.

### List of drawings

The invention will be described in more detail with reference to the appended drawings in which:
Fig. 1 illustrates a top view of an embodiment of an accept tank arrangement and
fig. 2 illustrates a side view of the accept tank arrangement.

### Detailed description of the invention

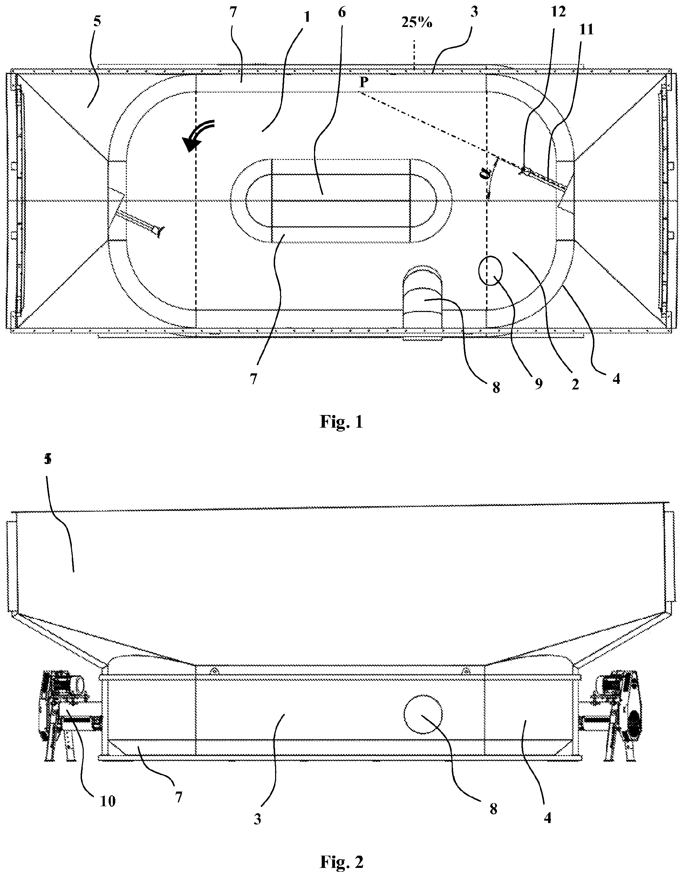

Fig. 1 illustrates a top view of an embodiment of an accept tank arrangement and fig. 2 illustrates a side view of the accept tank arrangement. An accept tank is usually placed under a screened end part of a drum pulper, which processes wastepaper or other fibrous material. Suspension of pulped fibers and small particles drop through the screen to the accept tank directly or flow down along a funnel part 5 surrounding the tank. The accept tank preferably has a substantially flat bottom at least at central elongated section 1 The elongated section 1 has sidewalls 3 which are normally vertical and straight. The sidewall 3 may also be longitudinally curved, preferably outwards in order to create an oval form of the tank. At both ends of the tank are arched ends 2 which have vertical arched sidewalls 4. A straight section may exist between two arched sidewall 4 sections. The arched corner sections ensure that the flow will smoothly circulate in and out of the arched ends 2. The bottom of the accept tank has preferably bevels 7 at all edges for avoiding steady water and precipitation of heaviest particles at the edges. The direction of the circular flow is marked with an arrow in. fig. 1.

Preferably an elongated centerpiece 6 is positioned within the middle of the elongated section 1 for preventing interaction between right and left direction flows. For best flow properties, both ends of the elongated centerpiece 6 are rounded. The elongated centerpiece should have enough width in order to minimize turbulence at the ends of it, where the circular flow will turn to another side of the tank. Preferred width of the elongated centerpiece 6 is between 10% to 30% of the width of the tank.

A mixer 10 normally comprises an electric motor, a gearbox, and an axle 11 with a propeller 12 at the end of the axle 11. The propeller 12 typically creates propulsion flow away to the direction of the center line of the axle 11. Any other combinations that is illustrated may be used for the implementing the invention as the main effect is based on the initial position and direction of the propulsion flow. For example, a short propellor axle 11 and a 90 degrees gearbox like in outboard engines can be used instead. The propeller 12 may have a fan tube around it for best propulsion performance, but any stable crossflow obstacles should be avoided for avoiding accumulation of fibers around them.

Horizontal alignment α of at least one axle 11 of the mixer 10 is such that the centerline of the axle i.e. the thrust vector of the mixer is aimed at a point P, which is at the sidewall of the elongated section 1 at least 25% of the length of the elongated section 1 away from the beginning of the elongated section 1. More advantageously, the point P lies within 30 to 60% of the length of the elongated section 1 from the beginning of the elongated section 1. For best flowing properties, the propeller 12 at the end of the at least one axle 11 is located within the arched end 2. In principle, best flow properties are achieved, if the positions and alignments are symmetric with respect to the centerpoint of the tank. The horizontal alignment α of the at least one axle of the mixers is from 15 to 35 degrees and more preferably from 20 to 30 degrees from the longitudinal center line of the accept tank. Because the accept outlet 10 affects a bit to the flow, the propeller 12 at that side of the tank may be positioned and/or aligned differently depending of the position, dimensions and form of the accept outlet 10.

An accept outlet 8 is preferably positioned far away in flow direction from a propeller 12. The accept outlet 8 may be for example a downward curved tube. The accept outlet 8 tube may be profiled to have an optimized streamlined shape for least drag effect to the circular flow. If the tank has a reject outlet 9, it should be placed after the accept outlet 8, where the flow is slowest and most turbulent. Preferably the reject outlet 9 is located at least partially within the curved end 2. Any known design of a reject outlet 9 with conveying means can be used. Some suitable examples of reject outlets are disclosed in publication CN108330719.

## Claims

1. An accept tank arrangement for mixing of pulped fiber suspension within an accept tank which accept tank has a form of two opposite arched ends (2) having sidewalls (4) and an elongated section (1) between the arched ends (2) having sidewalls (3) and the accept tank has at least two mixers (10), and at least one of the mixers (10) are located within the arched end (2) and the mixers (10) have propellers (12) at ends of their axles (11) and the axles (11) of the mixers (10) point to the same side of the tank when looked from the arched end (2) where the mixer (10) is attached and the tank has an accept outlet (8), **characterized in that** at least two of the axles (11) of the mixers (10) are horizontally aligned to the direction of the elongated section (1) and the center line of at least one axle (11) of a mixer (10) is aimed at a point (P), which is at the sidewall (3) of the elongated section (1) at least 25% of the length of the elongated section (1) away from the beginning of the elongated section (1).

2. The accept tank arrangement of claim 1, **wherein** the said at least one axle (11) of the mixer (10) is at the other side of the longitudinal center line of the accept tank than the accept outlet (8) and the propeller (12) at the end of the axle (11) is located within the arched end (2).

3. The accept tank arrangement of claim 1 or 2, **wherein** the number of the mixers (10) is two.

4. The accept tank arrangement of any of previous claims, **wherein** the propellers (12) are positioned and/or aligned symmetric with respect to the centerpoint of the accept tank.

5. The accept tank arrangement of any of previous claims, **wherein** within the center of the elongated section is an elongated centerpiece (6), which has a length which is at least 50 % of the length of the elongated center section (1)

6. The accept tank arrangement of claim 5, **wherein** the elongated centerpiece (6), has rounded ends and a width, which is less than 30 % of the width of the elongated center section (1).

7. The accept tank arrangement of any of previous claims, **wherein** the accept tank has a flat bottom at least at the elongated section (11) of the accept tank and/or the variation of depth at the elongated section (11) is below 5 % of the length of the elongated section.

8. The accept tank arrangement of any of previous claims, **wherein** a reject outlet (9) is located at least partially at bottom of at least at one of one the arched ends (2) of the accept tank.

9. The accept tank arrangement of any of previous claims, **wherein** at least a part of the accept outlet (8) is positioned at the end half of the elongated section (1) to where a mixer (10) points to and/or within the arched end (2) opposite to the side of the mixer (10).

10. The accept tank arrangement of any of previous claims, **wherein** a reject outlet (9) is positioned after the accept outlet (8) in flow direction within the same elongated section (1) and/or at the next arched end (2).

11. The accept tank arrangement of any of previous claims, **wherein** the horizontal alignment of the at least one axle of the mixers (11) is from 15 to 35 degrees from the longitudinal center line of the accept tank.

12. The accept tank arrangement of any of previous claims, **wherein** the horizontal alignment of the at least one axle (11) of the mixers (10) is from 20 to 30 degrees from the longitudinal center line of the accept tank.

13. The accept tank arrangement of any of previous claims, **wherein** the length of the accept tank is 1,5 to 2 times longer than is the width of the accept tank.

14. The accept tank arrangement of any of previous claims, **wherein** the propeller (12) of the mixer (10) has a diameter which is from 10% to 20% of the width of the accept tank.

## Patentansprüche

1. Gutstofftankanordnung zum Mischen von aufgelöster Faserstoffsuspension in einem Gutstofftank, wobei der Gutstofftank eine Form von zwei gegenüberliegenden gewölbten Enden (2) mit Seitenwänden (4) und einem länglichen Abschnitt (1) zwischen den gewölbten Enden (2) mit Seitenwänden (3) aufweist und der Gutstofftank mindestens zwei Mischer (10) aufweist, und wobei mindestens einer der Mischer (10) innerhalb des gewölbten Endes (2) angeordnet ist und die Mischer (10) Propeller (12) an Enden ihrer Achsen (11) aufweisen und die Achsen (11) der Mischer (10) bei Ansicht von dem gewölbten Ende (2), an dem der Mischer (10) angebracht ist, zur gleichen Seite des Tanks zeigen und der Tank einen Gutstoffauslass (8) aufweist, **dadurch gekennzeichnet, dass** mindestens zwei der Achsen (11) der Mischer (10) horizontal mit der Richtung des länglichen Abschnitts (1) ausgerichtet sind und die Mittellinie mindestens einer Achse (11) eines Mischers (10) auf einen Punkt (P) gerichtet ist, der an der Seitenwand (3) des länglichen Abschnitts (1) mindestens 25 % der Länge des länglichen Abschnitts (1) vom Anfang des länglichen Abschnitts (1) entfernt ist.

2. Gutstofftankanordnung nach Anspruch 1, wobei die mindestens eine Achse (11) des Mischers (10) auf der zu dem Gutstoffauslass (8) anderen Seite der Längsmittellinie des Gutstofftanks liegt und sich der Propeller (12) am Ende der Achse (11) innerhalb des gewölbten Endes (2) befindet.

3. Gutstofftankanordnung nach Anspruch 1 oder 2, wobei die Anzahl der Mischer (10) zwei ist.

4. Gutstofftankanordnung nach einem der vorhergehenden Ansprüche, wobei die Propeller (12) symmetrisch in Bezug auf den Mittelpunkt des Gutstofftanks positioniert und/oder ausgerichtet sind.

5. Gutstofftankanordnung nach einem der vorhergehenden Ansprüche, wobei in der Mitte des länglichen Abschnitts ein längliches Mittelstück (6) liegt, das eine Länge aufweist, die mindestens 50 % der Länge des länglichen Mittelabschnitts (1) beträgt.

6. Gutstofftankanordnung nach Anspruch 5, wobei das längliche Mittelstück (6) abgerundete Enden und eine Breite aufweist, die kleiner als 30 % der Breite des länglichen Mittelabschnitts (1) ist.

7. Gutstofftankanordnung nach einem der vorhergehenden Ansprüche, wobei der Gutstofftank zumindest an dem länglichen Abschnitt (11) des Gutstofftanks eine flache Unterseite aufweist und/oder die Schwankung der Tiefe an dem länglichen Abschnitt (11) unter 5 % der Länge des länglichen Abschnitts beträgt.

8. Gutstofftankanordnung nach einem der vorhergehenden Ansprüche, wobei sich ein Spuckstoffauslass (9) zumindest teilweise auf einer Unterseite mindestens eines der gewölbten Enden (2) des Gutstofftanks befindet.

9. Gutstofftankanordnung nach einem der vorhergehenden Ansprüche, wobei mindestens ein Teil des Gutstoffauslasses (8) an der Endhälfte des länglichen Abschnitts (1), zu der ein Mischer (10) zeigt, und/oder innerhalb des gewölbten Endes (2) gegenüber der Seite des Mischers (10) positioniert ist.

10. Gutstofftankanordnung nach einem der vorhergehenden Ansprüche, wobei ein Spuckstoffauslass (9) nach dem Gutstoffauslass (8) in Strömungsrichtung innerhalb desselben länglichen Abschnitts (1) und/oder am nächsten gewölbten Ende (2) positioniert ist.

11. Gutstofftankanordnung nach einem der vorhergehenden Ansprüche, wobei die horizontale Ausrichtung der mindestens einen Achse der Mischer (11) zwischen 15 und 35 Grad von der Längsmittellinie des Gutstofftanks beträgt.

12. Gutstofftankanordnung nach einem der vorhergehenden Ansprüche, wobei die horizontale Ausrichtung der mindestens einen Achse (11) der Mischer (10) zwischen 20 und 30 Grad von der Längsmittellinie des Gutstofftanks beträgt.

13. Gutstofftankanordnung nach einem der vorhergehenden Ansprüche, wobei die Länge des Gutstofftanks 1,5- bis 2-mal länger als die Breite des Gutstofftanks ist.

14. Gutstofftankanordnung nach einem der vorhergehenden Ansprüche, wobei der Propeller (12) des Mischers (10) einen Durchmesser aufweist, der zwischen 10 % und 20 % der Breite des Gutstofftanks beträgt.

## Revendications

1. Dispositif de réservoir d'accepté destiné à mélanger une suspension de fibres réduite en pâte à l'intérieur d'un réservoir d'accepté, lequel réservoir d'accepté présente une forme de deux extrémités arquées (2) opposées comportant des parois latérales (4) et une section allongée (1) entre les extrémités arquées (2) comportant des parois latérales (3), et le réservoir d'accepté comporte au moins deux mélangeurs (10), et au moins un des mélangeurs (10) est situé à l'intérieur de l'extrémité arquée (2) et les mélangeurs (10) ont des hélices (12) aux extrémités de leurs essieux (11) et les essieux (11) des mélangeurs (10) pointent vers le même côté du réservoir lorsqu'on les regarde depuis l'extrémité arquée (2) où le mélangeur (10) est fixé et le réservoir présente une sortie d'accepté (8), **caractérisé en ce qu'**au moins deux des essieux (11) des mélangeurs (10) sont alignés horizontalement dans la direction de la section allongée (1) et **en ce que** la ligne centrale d'au moins un essieu (11) d'un mélangeur (10) est orientée vers un point (P), qui se trouve au niveau de la paroi latérale (3) de la section allongée (1) à au moins 25 % de la longueur de la section allongée (1) à partir du début de la section allongée (1).

2. Dispositif de réservoir d'accepté selon la revendication 1, ledit au moins un essieu (11) du mélangeur (10) se trouvant de l'autre côté de la ligne centrale longitudinale du réservoir d'accepté par rapport à la sortie d'accepté (8) et l'hélice (12) à l'extrémité de l'essieu (11) étant située à l'intérieur de l'extrémité arquée (2).

3. Dispositif de réservoir d'accepté selon la revendication 1 ou 2, le nombre de mélangeurs (10) étant deux.

4. Dispositif de réservoir d'accepté selon l'une quelconque des revendications précédentes, les hélices (12) étant positionnées et/ou alignées symétriquement par rapport au point central du réservoir d'accepté.

5. Dispositif de réservoir d'accepté selon l'une quelconque des revendications précédentes, au centre de la section allongée se trouvant une pièce centrale allongée (6), dont la longueur représente au moins 50 % de la longueur de la section centrale allongée (1).

6. Dispositif de réservoir d'accepté selon la revendication 5, la pièce centrale allongée (6) ayant des extrémités arrondies et une largeur, qui est inférieure à 30 % de la largeur de la section centrale allongée (1).

7. Dispositif de réservoir d'accepté selon l'une quelconque des revendications précédentes, le réservoir d'accepté ayant un fond plat au moins au niveau de la section allongée (11) du réservoir d'accepté et/ou la variation de profondeur au niveau de la section allongée (11) étant inférieure à 5 % de la longueur de la section allongée.

8. Dispositif de réservoir d'accepté selon l'une quelconque des revendications précédentes, une sortie de rejet (9) étant située au moins partiellement au fond d'au moins l'une des extrémités arquées (2) du réservoir d'accepté.

9. Dispositif de réservoir d'accepté selon l'une quelconque des revendications précédentes, au moins une partie de la sortie d'accepté (8) étant positionnée à la moitié d'extrémité de la section allongée (1) vers laquelle un mélangeur (10) pointe et/ou à l'intérieur de l'extrémité arquée (2) à l'opposé du côté du mélangeur (10).

10. Dispositif de réservoir d'accepté selon l'une quelconque des revendications précédentes, une sortie de rejet (9) étant positionnée après la sortie d'accepté (8) dans la direction d'écoulement à l'intérieur de la même section allongée (1) et/ou à l'extrémité arquée (2) suivante.

11. Dispositif de réservoir d'accepté selon l'une quelconque des revendications précédentes, l'alignement horizontal d'au moins un essieu des mélangeurs (11) étant de 15 à 35 degrés par rapport à la ligne centrale longitudinale du réservoir d'accepté.

12. Dispositif de réservoir d'accepté selon l'une quelconque des revendications précédentes, l'alignement horizontal de l'au moins un essieu (11) des mélangeurs (10) étant de 20 à 30 degrés par rapport à la ligne centrale longitudinale du réservoir d'accepté.

13. Dispositif de réservoir d'accepté selon l'une quelconque des revendications précédentes, la longueur du réservoir d'accepté étant de 1,5 à 2 fois plus grande que la largeur du réservoir d'accepté.

14. Dispositif de réservoir d'accepté selon l'une quelconque des revendications précédentes, l'hélice (12) du mélangeur (10) ayant un diamètre qui est compris entre 10 et 20 % de la largeur du réservoir d'accepté.
